(19) Europäisches Patentamt
European Patent Office
Office européen des brevets

(11) **EP 3 717 198 B1**

(12) **EUROPEAN PATENT SPECIFICATION**

(45) Date of publication and mention
of the grant of the patent:
**13.08.2025 Bulletin 2025/33**

(21) Application number: **18829466.4**

(22) Date of filing: **22.11.2018**

(51) International Patent Classification (IPC):
**B29C 45/76** *(2006.01)*

(52) Cooperative Patent Classification (CPC):
**B29C 45/766; B29C 45/7693**

(86) International application number:
**PCT/IB2018/059217**

(87) International publication number:
**WO 2019/106499 (06.06.2019 Gazette 2019/23)**

(54) **MOULDING-PARAMETERS PROCESSING METHOD FOR AN INJECTION PRESS**

VERFAHREN ZUR VERARBEITUNG VON FORMPARAMETERN FÜR EINE EINSPRITZPRESSE

PROCÉDÉ DE TRAITEMENT DE PARAMÈTRES DE MOULAGE DESTINÉS À UNE PRESSE À INJECTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.11.2017 IT 201700137440**

(43) Date of publication of application:
**07.10.2020 Bulletin 2020/41**

(73) Proprietor: **Inglass S.p.A.**
**31020 San Polo di Piave (Treviso) (IT)**

(72) Inventors:
• **BAZZO, Maurizio**
**31020 San Polo di Piave (TV) (IT)**
• **PAVAN, Nicola**
**31020 San Polo di Piave (TV) (IT)**
• **VILLA, Riccardo**
**31020 San Polo di Piave (TV) (IT)**

(74) Representative: **Citron, Massimiliano**
**Via Primo Maggio, 6**
**31020 San Fior (TV) (IT)**

(56) References cited:
DE-A1- 4 025 221          JP-A- 2003 251 671
JP-A- 2003 271 678        JP-A- 2004 175 120
JP-A- 2005 169 766        JP-A- H04 305 424
US-A1- 2002 188 375       US-B1- 9 573 307

**Description**

The invention relates to a method for processing molding parameters for an injection molding press obtained by means of CAE (*Computer Aided Engineering*). The invention also refers to a method for optimizing molding parameters for an injection molding press obtained through CAE (*Computer Aided Engineering).*

In general, the definition of the final molding parameters loaded in the various control units of an injection molding press requires a large number of molding tests and a long period of manual setting, since it all depends on the know-how and experience of the operator programming the press.

To limit the preparation period, virtual molding simulations are performed using CAE programs to produce the initial molding parameters. However, CAE programs are not perfect and cannot take into account all the complex phenomena that occur within a mould and that change from mould to mould. E.g. the physical conditions during the actual molding do not coincide with the molding conditions assumed by the CAE software, so in practice the results of the actual molding vary (even significantly) from the results of the virtual molding.

To solve this problem US2002/0188375 presents a method for determining the molding parameters using CAE.

First, temporary molding parameters for the injection press, taken from a standard database or after a generic test injection, are set up. Then, with the press an actual molding of the piece is carried out and a real profile of the pressure variation actually measured during the actual injection phase is acquired. Meanwhile, the CAE system performs virtual molding (simulation) using provisional molding data and obtains a virtual profile. By comparing the virtual and the real profile on a display, an operator manually corrects the parameters so that a part of the profiles coincides, thus obtaining intermediate parameters. The decision about which side to make a match on is crucial and made by the operator. Then, to reduce the drastically undulating trends of some physical variables, virtual modeling is performed again to optimize, for example, the temperature distribution and the pressure distribution. Consequently, the intermediate parameters are still manually corrected to obtain parameters for optimal moulded products.

It is evident that in US2002/0188375 the convergence towards optimized parameters depends only on the experience or ability of the operator, so there is no certainty of result. Furthermore, the choice of the initial parameters is arbitrary and unrelated to the product to be moulded, so the initial parameters are almost always very far from the optimal ones and many iterations are needed for convergence (if ever there is).

DE4025221 A1 disclosed a system for optimizing molding parameters.

It would be very useful to have a method for easily processing and/or comparing the data generated by the CAE simulation and the data collected from actual molding processes.

It would also be very useful to have an optimization method that is more precise, faster and less operatordependent.

The object of the invention is to provide such a method to overcome one or more of the aforesaid problems. The method is defined in the appended claims, wherein the dependent ones define advantageous variants.

A first aspect of the invention relates to a method for processing molding parameters for an injection molding machine obtained through CAE (*Computer Aided Engineering*), comprising the steps of

(i) simulating through CAE a moulding process needed to mould an object, wherein the CAE simulation generates (a file of) simulation results,
(ii) generating first machine parameters by electronically processing the simulation results to make them compatible with the data protocol of a control unit of the machine, so that the machine can perform an actual molding process according to the first machine parameters;
(iii) obtaining second machine parameters, different from the first ones, from the execution of another molding process for the same object;
(iv) saving in an electronic database (e.g. a memory or a server) accessible by a user the first and second machine parameters associating them in a common collection.

The simultaneous and ordered presence in the database of the machine parameters allows an operator to find and process them quickly, having available in an orderly manner the evolutions or developments of a molding project/process. The fast and orderly availability of the evolutions or developments of a molding project/process allows to efficiently evaluate which variations in the machine parameters can lead to an improved quality moulded object.

By *control unit* of the molding machine it is meant here and below any control unit comprised in a machine designed to mould objects by injection of molten material. In particular, the *control unit* may be

the control unit of the press (i.e. of the members exerting a force on the mold to counter the internal injection pressure), and/or
the control unit dedicated to the injection control (e.g. for the control of a hot runner and/or an injector), and/or
the control unit dedicated to the control of the movement of the mold or of parts of the mold and/or mechanisms external to the mold inherent in - or cooperating with - the molding cycle, and/or
a control unit that remotely sends commands to the components of the machine; and/or

a control unit that sends commands to accessory components of the machine, such as a dryer or a humidifier.

The same applies to the *control unit 20* described below.

By *software* it is meant one or more programs, or sets of instructions, which may be used on a processing system, and/or executed for example by a microprocessor, in order to perform certain actions or activities.

By *CAE software* it is meant a software application which, by numerical calculation, solves exactly or in approximate form mathematical equations relative to a model of a physical phenomenon. The CAE system - here applied to injection molding - e.g. allows the input of a mathematical model of the physical system to be studied, the numerical calculation on the model and the visualization and analysis of the results.

By *machine parameters* it is meant the parameters used in the programming of a said control unit with respect to the production cycle of a moulded object, such as for example. the parameters of speed and pressure of the injection unit, or the machine parameters relating to one or each closing and/or opening speed profile of the shutters, or one or each activation sequence of the injectors, or one or each movement sequence of parts of the mold, or one or each movement sequence of external parts - but associated with the molding process. As an example of the last category, we cite mechanical structures for IMC (*In-mold Closing*) or IMA (*In-mold Assembly*), both with the aim of making the mold produce e.g. a cap already ready to be mounted on the destination bottle, avoiding a manual or automated closing step of the same.

By *processing* by means of software it is meant the transformation of data through the application of mathematical formulas or algorithms.

Preferably, said simulation results of the CAE software comprise:

- generic machine parameters, i.e. not referred to a particular machine but which generally express a desired adjustment or setting of the machine, such as for example the injection speed profile of the injection unit; and/or
- simulated process data, i.e. values of physical quantities related to the molding process, such as for example the pressure or temperature at a certain point of the molded piece or of the mold.

The generic machine parameters are adapted to a particular machine by means of said conversion, in which the generic machine regulations or settings used in the CAE simulation are effectively implemented in the machine, translating them into parameterizations or specific commands of the control unit (each control unit operates with different data protocols and/or structures).

Preferably, the generic machine parameters and/or the simulated process data are also saved in the common collection.

Preferably in said common collection there are saved also real process data, that is values of physical quantities relative to the molding process detected by sensors on board the machine during the actual injection molding process, such as for example the pressure or temperature at a certain point of the molded piece or mold.

Preferably in said common collection the real process data obtained during the molding with the first and/or second machine parameters, are saved.

In a variant, step (ii)

is performed by a software, and/or
occurs with a further step of generating from the simulation results obtained from the CAE simulation software a *file* readable by a software installed in the control unit. The file may, if necessary, undergo a data conversion process to adapt the data protocol of the CAE simulation software to the data protocol of the software installed in one of the abovementioned control units. The conversion process too is preferably performed by a software.

In a variant, step (iv)

is performed by a software, and/or
occurs with the further step of generating
from data internal to the software installed in the control unit and/or
from real process data detected by the machine,
a *file* readable by the CAE simulation software. The file can, if necessary, undergo a conversion process to adapt the data protocol of the software installed in the control unit to the CAE simulation software. This conversion process is also preferably performed by software.

In a variant of step (iii) and (iv), said other molding process is performed N times with machine parameters different from the first machine parameters, where N >= 2. In each N-th iteration the second machine parameters used may be:

either manually-set machine parameters, or
generated by the following steps of the method:

processing with a software the machine parameters of the (N-1)-th iteration and the machine parameters of the (N-2)-th iteration to generate new machine parameters, and
using said new machine parameters as machine parameters in the N-th iteration of step (iii).

In a variant of step (iii) and (iv), said other molding process is performed with machine parameters different from the first machine parameters, where N >= 2. In each N-th iteration the second machine parameters used may be:

> either manually-set machine parameters, or generated by the following steps of the method:

>> processing with a software the machine parameters of the (N-1)-th iteration, and using said new machine parameters as machine parameters in the N-th iteration of step (iii).

It is possible to also optimize the machine parameters thanks to the further steps of the method of

> (v) processing the data contained in the common collection with a software and
> (vi) modifying the machine parameters calculated with a subsequent CAE simulation as a function of the processing produced by said software in step (v).

In particular, it is possible to obtain optimized machine parameters by modifying the CAE software internally or modifying the data that it generates as a function of the machine parameters generated by the previous iteration or as a function of all the previous iterations. The method then makes it possible to construct said database of parameters and then exploit the overall information thereof to modify the parameters of the next iteration.

The iterations e.g. may take place always producing the same object, in order to converge more quickly to a set of optimized parameters (each time the specific knowledge gained until the second-last iteration is fully exploited).

After various iterations of steps (i) to (vi), step (vi) will be able to generate machine parameters which, used for example in the moulding machine, will lead to a less faulty or higher quality object.

If necessary at each N-th iteration said conversion is performed to obtain the machine parameters adapted to the control unit.

In a variant, step (v) occurs through a software. This software may e.g. be the software installed in the control unit, or the CAE simulation software or a third software distinct from the first two. Said software has, and/or has access to, the first and second machine parameters, or in general to all the files or data present in said common collection and/or related to one or each iteration.

In a variant, step (vi) takes place through a software, e.g. through said third software or through the CAE simulation software. The execution of one or each step (i)-(vi) through a software allows automation, speed and repeatability.

If step (vi) takes place through said third software, such third software may communicate with the CAE simulation software in various ways, e.g. via a data exchange file or in real time by sharing a common memory area or virtual environment, such as the said database.

The advantage of using a third software is to avoid modifying the CAE simulation software, which is usually a complex and very specialized program.

In an advantageous variant, the third software may be configured to learn and/or modify its output data, which are input to the CAE simulation software, to optimize the data then generated through simulation by the CAE simulation software. Therefore it is not necessary to alter the functioning of the CAE simulation software (a complex operation, which could also ruin its computational stability). The result of the calculation algorithms of the CAE simulation software can be corrected by modifying the input data brought to the CAE software. In essence, said third software applies a corrective preprocessing to the data input to the CAE software.

In a different advantageous variant, the third software is configured to modify the data generated at the output of the CAE simulation software, to optimize the data generated through simulation by the CAE software. Thus, even this way it is not necessary to alter the operation of the CAE simulation software, of which the result of the calculation algorithms is corrected by modifying the output data (said simulation results). In essence, said third software applies a corrective post-processing to said simulation results.

In a different advantageous variant, the third software is configured to modify a conversion software which performs said conversion between the simulation results and the machine parameters to be loaded in the control unit. Through the modification of the conversion software, which for example is carried out by modifying parameters or variables inside the conversion software, the machine parameters to be loaded in the control unit can be optimized.

E.g. if $A_1$ is a simulation result that is converted into a machine parameter $P_1$ by an algorithm in the conversion software via the function

$$P_1 = \mathbf{k} \cdot \mathbf{f}(A_1);$$

the third software may be configured to modify the coefficient $\mathbf{k}$ and/or the function $\mathbf{f}(\cdot)$.

In general, the conversion software may be updated according to the algorithm:

$$k_j = f\left(A_0, A_1, \dots, A_n, B_0, B_1, \dots, B_z\right)$$

$$P_i = f'\left(k_0, k_1, \dots, k_j, A_0, A_1, \dots, A_n\right)$$

where:

> $P_i$ = i-th machine parameter output by the conversion software,
> $k_0, k_1, \dots, k_j$ = correction parameters,

$A_0, A_1, ... , A_n$ = simulation results transferred from the CAE simulator;
$B_0, B_1, ..., B_z$ = actual process data.

An exemplary formula for updating the CAE simulation results, is

$$q_j = g\left(A_0, A_1, ... , A_{n,} B_0, B_1, ... , B_z\right)$$

$$T_i = g'\left(q_0, q_1, ... , q_{j,} A_0, A_1, ... , A_n\right)$$

where:

$T_i$ = i-th parameter in the CAE simulation results,
$q_0, q_1, ..., q_j$, = correction parameters,
$A_0, A_1, ... , A_n$ = simulation results transferred from the CAE simulator;
$B_0, B_1, ... , B_z$ actual process data.

Another advantage is that the third software may comprise artificial intelligence algorithms or neural networks to specifically learn gradually and improve the quality of the data entered as input to the CAE simulation software or of the corrective data applied to the CAE software simulation results.

The third software may be an integrated module or part of/in the CAE software or a separate software, distinct from the CAE software, from which it receives and to which it sends data. As a separate software, distinct from the CAE software, the third software may be e.g. an integrated module or part of the software of an aforementioned control unit or a software running on a device or computer other than the one executing the CAE software and other than the one operating control unit.

If step (vi) occurs through the CAE simulation software, it can receive the processing of the first and second machine parameters in various ways, e.g. through an ad hoc module or a data-entry user interface.

In particular, the third software has such instructions that the data saved in the common collection are used as arguments of mathematical functions or algorithms to generate data to be given as input or output to the CAE software.

In a variant, the second machine parameters are entered manually in the control unit by an operator.

In a variant, the simulation software is loaded and/or executed in any control unit of the machine or press.

In a variant, the parameters returned by the injection press or injection machine comprise not only said machine parameters and/or the said process data monitored by the sensors but also the numerical values generated by auxiliary members not strictly necessary for the injection process itself, such as for example, direct or indirect measuring and/or control devices placed downstream the process.

It should be noted that all the above defined variants are object of the invention whether considered alone or in combination with each other.

The advantages of the invention will be even clearer from the following description of a preferred method, in which reference is made to the attached drawing in which

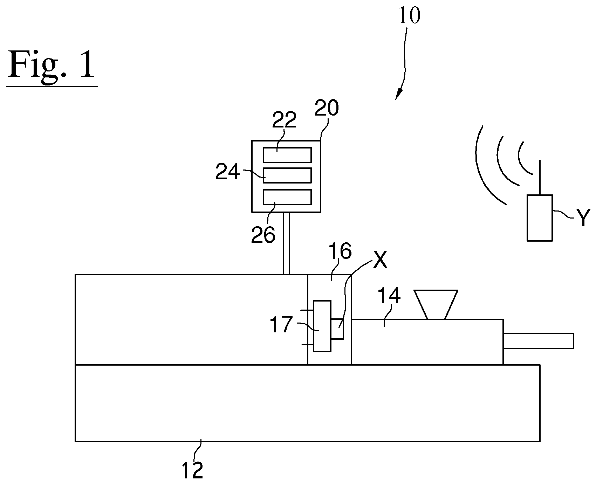

- Figure 1 shows a schematic view of a press;
- Figure 2 shows a block scheme.

In the figures: equal numerical references indicate equal elements, and arrows symbolize a transfer of data and/or data itself (where indicated).

The method is applied to an injection molding machine 10. The machine 10 generally comprises e.g. an injection device 14, arranged on a base 12 and provided with a mold 16 with one or more hot runners 17.

A control unit 20, equipped with intelligence, drives various members of the molding machine during the molding steps, and comprises e.g. a display 22 and an operating panel 24 (e.g. a keyboard or touch screen). The control unit 20 is e.g. connected - in a known way - to actuators (not shown) to move parts of the mold and injectors, and/or to sensors for detecting the state of the actuators and the mold.

The control unit 20 also comprises a computer or microprocessor 26, connected to the panel 24.

The control unit 20 can perform data exchange, that is bidirectional data communications, with the outside of the machine 10.

Note that the control unit 20 could also refer to

- a control unit designed to control the actuators for moving parts of the mold and/or
- an control unit X designed to control the injectors and/or the
  hot runner 17; and/or
- a control unit Y located at a remote place that sends commands, e.g. via wireless means, to the machine 10.

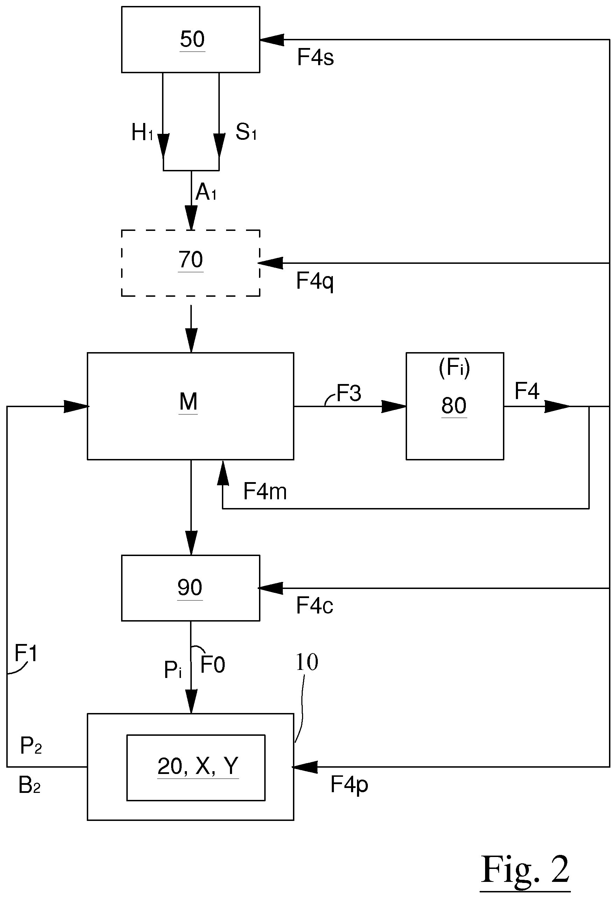

Fig. 2 shows in a block diagram preferred steps of the method.

50 indicates a software or CAE environment in which an operator can model an injection molding process and perform a simulation to virtually study the outcome, i.e. the moulded product.

In the following, the subscript $i$, $i >= 1$, generally indicates the i-th iteration, if there are multiple iterations.

A first step of the method involves modeling a process of injection molding and running a simulation with the software 50, in order to generate simulation results $A_1$.

Preferably, the simulation results at the first iteration $A_1$ comprise generic machine parameters $H_1$ (as defined above) and/or simulated process data $S_1$, as defined above.

A second step of the method involves extracting from the CAE environment 50 the simulation results $A_1$ and inserting them into a memory or electronic database M, accessible by a user, such as a server.

Then, dedicated machine parameters $P_1$ (arrow F0) are generated from the simulation results $A_1$.

This step of the method may be performed by a software, indicated with the block 90, which fetches data from memory M and transfers them as input to the control unit 20 as machine parameters to be used. In the block 90 a format conversion may take place, to adapt the parameters to the control unit 20 if the protocol is different. For this purpose, preferably the block 90 generates a data file containing machine parameters $P_1$, for facilitating the circulation (e.g. via email) and/or the storage.

The software of block 90 may reside in the memory M, in the control unit 20 or elsewhere remotely.

A third step of the method comprises molding in the machine 10 with the parameters $P_1$ coming from block 90. It is expected that this molding is not optimal, so, as a next step, by varying, e.g. manually, the machine parameters entered earlier new machine parameters are obtained and with them another molding is performed in the machine 10. This step, which can be repeated several times until reaching a moulded product of better quality or desired features, generates at least another set of machine parameters $P_2$, or various sets $P_2$, $P_3$, $P_4$, etc., it depends on the number of repetitions.

A further step of the method involves exporting (arrow F1) from the control unit 20 the data used and/or generated during one or the last iteration. This data may be the machine parameters $P_2$ (or $P_{i+1}$) used during one or the last iteration and/or the actual process data $B_i$ related to one or the last iteration (see definition above).

The machine parameters $P_2$ (or $P_{i+1}$) are exported preferably via a data file that contains them, to facilitate their circulation (e.g. via email) and/or their memorization. In the example, the parameters $P_2$ are exported to the memory M.

Another step of the method involves exporting (arrow F1) from the machine 10, together with the data $P_i$, the actual process data $B_i$ and importing them e.g. in the memory M.

Then a software in a block 80 processes the data present in the memory M, e.g. $H_1$, $P_2$ (... $P_{i+1}$) and/or $S_1$, $B_2$ (... $B_{i+1}$). The software of the block 80 resides preferably in the memory M, or it can reside in the control unit 20 or elsewhere remotely.

The data transfer to the input of software 80 (arrow F3) may, for example, take place by migrating a *file* containing the data and generated respectively by the control unit 20 and/or by the software 50. Almost certainly a data conversion is necessary to adapt the data protocol between the software 80 and the control unit 20 and the software 50. Preferably the conversion is performed by the software 80, thereby avoiding to modify pre-existing systems.

The 80 software processes the input data F3 and generates a data output F4.

In this case too a data conversion may be necessary for adapting the data protocol between software 80 and e.g. the software 50. Preferably the conversion is performed by the software 80, thereby avoiding to modify the software 50.

The data output F4 is the product e.g. of intelligent algorithms that gradually learn from the differences between the data $H_1$, $P_2$, $P_i$ and/or $S_1$, $B_2$, $B_i$ how to generate the data F4 so that a subsequent software simulation 50 generates parameters for the control unit 20 capable of leading to a more accurate moulded product. In particular, the data output F4 is generated as a function of the differences between the data generated during an iteration by the simulator 50 to the molding in the machine. For this purpose, preferably the software 80 is associated with the memory or database M, in which there are saved

    the data $P_i$ as the control unit 20 uses them, and/or the results $A_i$ of the processing performed by the software 50, and/or
    the actual process data $B_i$ detected by the sensors of the machine 10, and/or
    the results $F_i$ of the i processing operations performed by the software 80 itself.

Preferably all the aforesaid data are saved in the database M, to improve the corrective and optimizing capacity of the software 80.

In the database M, a historical archive is thus created which contains data related to subsequent developments and improvements for the object's molding process.

As it can be seen, the system of fig. 2 altogether can allow the software 50 to generate more realistic simulations thanks to the contribution of the output F4 processed by the software 80. In particular, the software 80 includes algorithms and/or mathematical functions that have as argument e.g. the data $H_1$, $P_2$, $P_i$ and/or $H_1$, $B_2$, $B_i$ and/or $F_i$, and give as output optimized data or correction data.

In particular, the output F4 of the software 80 can be used to

- pass to the software 50 optimized parameters (arrow F4s) on which then the software 50 calculates a new simulation giving optimized results $A_{i+1}$; and/or
- generate correction parameters applied in cascade manner by an optional software module 70 to the simulation results $A_{i+1}$ (arrow F4q), so as to optimize - modifying them - the parameters $A_{i+1}$ without altering the operation of software 50;
- generate parameters $P_{i+1}$ to send them directly to the control unit 20 (arrow F4p) to perform a molding with the machine 10; and/or
- enlarge the database M to make up-to-date data $F_i$ (arrow F4m) available; and/or

- pass data to the conversion software 90 (arrow F4c) to generate an optimized output F0 with new parameters $P_{i+1}$. Data in the F4c stream may for example modify mathematical functions and/or conversion coefficients used within the software 90 to generate the output F0 from the data in the database M.

The software 80 may be implemented in many ways. E.g. it can work to integrate the functions of the software 90, or the software 80 may coincide with or be part of the software 90. Or, or even, the software 80 may be an integrated module or part of/in the software 50 or a separate software, distinct from the software 50, from which it receives and to which it sends data. As separate software, distinct from the software 50, the software 80 may be e.g. an integrated module or part of/in the software of the control unit 20 or a software that runs on a device or computer other than the one running the CAE software and other than the control unit 20.

In particular, the software 80 may apply a mathematical function or algorithms to the data F3 to obtain data $F_i$, especially by exploiting the knowledge or the history of the data accumulated in the memory M.

Note that the database or memory M, intended as a permanent storage of historical data, could also be absent. A case is e.g. the one in which the system of fig. 2 functions with multiple iterations on parameters $A_i$ generated in real time to optimize "on the fly" the parameters $P_i$ but does not save the results.

Note that each data stream F4s, F4q, F4m, F4c or F4p creates a feedback ring that originates in the data $A_i$ and/or the data F0 (or $P_2$ and $B_2$) and, through the software 80, arrives to new optimized data $A_{i+1}$ and/or data $P_{i+1}$ (or $P_{i+1}$ and $B_{i+1}$).

**Claims**

1. Method for processing moulding parameters ($P_{i+1}$) for an injection moulding machine (10) obtained by CAE comprising the steps of

   (i) simulating through CAE a moulding process needed to mould an object, wherein the CAE simulation generates simulation results ($A_i$),
   (ii) generating first machine parameters ($P_i$) by electronically processing the simulation results ($A_i$) to make them compatible with the data protocol of a control unit (20) of the machine, so that the machine can perform an actual moulding process according to the first machine parameters;
   (iii) obtaining second machine parameters ($P_{i+1}$), different from the first ones, from the execution of another moulding process for the same object;
   (iv) saving in an electronic database (M) accessible by a user operator the first and second machine parameters associating them in a common collection

**characterized by** the further steps of

   (v) processing the data contained in the common collection with a software,
   (vi) modifying the machine parameters calculated with a subsequent CAE simulation as a function of the processing produced by said software in step (v), to obtain optimized machine parameters.

2. Method according to claim 1, wherein in said common collection generic machine parameters and/or process simulated data are saved too.

3. Method according to claim 1 or 2, wherein in said collection real process data are saved, that is values of physical quantities relative to the moulding process detected by sensors on board the machine during an actual injection moulding process.

4. Method according to any one of the previous claims, wherein the real process data obtained during the moulding with the first and/or second machine parameters are saved in said common collection.

5. Method according to any of the previous claims, wherein step (ii) is performed by a software.

6. Method according to any of the previous claims, wherein step (ii) takes place with the further step of generating from the simulation results obtained by the simulation software CAE a *file* readable by a software installed in the control unit, wherein said *file* undergoes a data conversion process to adapt the data protocol of the CAE simulation software to the data protocol of the software installed in the control unit, the conversion process being performed by a software.

7. Method according to any one of the previous claims, wherein

   said other moulding process is performed N times with machine parameters different from the first machine parameters, where N>= 2, in each N-th iteration the used second machine parameters being machine parameters generated by the following steps:

      processing with a software the machine parameters of the (N-1)-th iteration and the machine parameters of the (N-2)-th iteration to generate new machine parameters, and using said new machine parameters as machine parameters in the N-th iteration of step (iii).

8. Method according to any one of the previous claims, wherein optimized machine parameters are obtained by internally modifying the CAE software.

9. Method according to any one of the previous claims, wherein optimized parameters are obtained by modifying the data that the CAE software generates.

10. Method according to any one of the previous claims, wherein a conversion software, which performs said conversion between the simulation results and the machine parameters to be loaded in the control unit, is modified to optimize the machine parameters.

11. Method according to any one of the previous claims, wherein step (v) is carried out through a third software distinct from the software installed in the control unit and the CAE simulation software, said third software having, and/or having access to, the first and second machine parameters or all the files or data present in said common collection and/or related to one or each iteration.

12. Method according to claim 11, wherein step (vi) is carried out through a software.

13. Method according to claim 11, wherein step (vi) is carried out through said third software.

14. Method according to claim 11, wherein step (vi) is carried out through the CAE simulation software.

**Patentansprüche**

1. Verfahren zur Verarbeitung von Formparametern ($P_{i+1}$) für eine Spritzgießmaschine (10), die durch CAE erhalten werden, mit den Schritten

(i) Simulieren eines zum Formen eines Objekts erforderlichen Formgebungsprozesses durch CAE, wobei die CAE-Simulation Simulationsergebnisse ($A_i$) erzeugt,
(ii) Erzeugen von ersten Maschinenparametern ($P_i$) durch elektronisches Verarbeiten der Simulationsergebnisse ($A_i$), um sie mit dem Datenprotokoll einer Steuereinheit (20) der Maschine kompatibel zu machen, so dass die Maschine einen tatsächlichen Formprozess gemäß den ersten Maschinenparametern durchführen kann;
(iii) Erhalten von zweiten Maschinenparametern ($P_{i+1}$), die sich von den ersten unterscheiden, aus der Ausführung eines anderen Formprozesses für das gleiche Objekt;

(iv) Speichern der ersten und zweiten Maschinenparameter in einer elektronischen Datenbank (M), auf die ein Benutzer zugreifen kann, und Zuordnen dieser Parameter zu einer gemeinsamen Sammlung

**dadurch gekennzeichnet** bei die weiteren Schritte

(v) Verarbeiten der in der gemeinsamen Sammlung enthaltenen Daten mit einer Software,
(vi) Modifizierung der mit einer nachfolgenden CAE-Simulation berechneten Maschinenparameter in Abhängigkeit von der durch die Software in Schritt (v) erzeugten Verarbeitung, um optimierte Maschinenparameter zu erhalten.

2. Verfahren nach Anspruch 1, wobei in der gemeinsamen Sammlung auch generische Maschinenparameter und/oder simulierte Prozessdaten gespeichert werden.

3. Verfahren nach Anspruch 1 oder 2, wobei in der Sammlung reale Prozessdaten gespeichert werden, d.h. Werte von physikalischen Größen in Bezug auf den Gießprozess, die von Sensoren an Bord der Maschine während eines tatsächlichen Spritzgießprozesses erfasst werden.

4. Verfahren nach einem der vorhergehenden Ansprüche, wobei die während des Spritzgießens mit den ersten und/oder zweiten Maschinenparametern erhaltenen realen Prozessdaten in der gemeinsamen Sammlung gespeichert werden.

5. Verfahren nach einem der vorhergehenden Ansprüche, wobei Schritt (ii) von einer Software durchgeführt wird.

6. Verfahren nach einem der vorhergehenden Ansprüche, wobei Schritt (ii) mit dem weiteren Schritt des Erzeugens einer von einer in der Steuereinheit installierten Software lesbaren Datei aus den von der Simulationssoftware CAE erhaltenen Simulationsergebnissen erfolgt, wobei die Datei einem Datenkonvertierungsprozess unterzogen wird, um das Datenprotokoll der CAE-Simulationssoftware an das Datenprotokoll der in der Steuereinheit installierten Software anzupassen, wobei der Konvertierungsprozess von einer Software durchgeführt wird.

7. Verfahren nach einem der vorhergehenden Ansprüche, wobei

der andere Formgebungsprozess N-mal mit Maschinenparametern durchgeführt wird, die sich von den ersten Maschinenparametern unterscheiden, wobei N>= 2, wobei in jeder N-ten Iteration die verwendeten zweiten Maschinenparameter Maschinenparameter sind, die durch die folgenden Schritte erzeugt werden:

Verarbeiten der Maschinenparameter der (N-1)-ten Iteration und der Maschinenparameter der (N-2)-ten Iteration mit einer Software, um neue Maschinenparameter zu erzeugen, und

Verwendung der neuen Maschinenparameter als Maschinenparameter in der N-ten Iteration von Schritt (iii).

8.  Verfahren nach einem der vorhergehenden Ansprüche, wobei optimierte Maschinenparameter durch interne Modifikation der CAE-Software erhalten werden.

9.  Verfahren nach einem der vorhergehenden Ansprüche, wobei die optimierten Parameter durch Modifizierung der von der CAE-Software erzeugten Daten erhalten werden.

10. Verfahren nach einem der vorhergehenden Ansprüche, wobei eine Konvertierungssoftware, die die Konvertierung zwischen den Simulationsergebnissen und den in die Steuereinheit zu ladenden Maschinenparametern durchführt, so modifiziert wird, dass die Maschinenparameter optimiert werden.

11. Verfahren nach einem der vorhergehenden Ansprüche, bei dem der Schritt (v) durch eine dritte Software ausgeführt wird, die sich von der in der Steuereinheit installierten Software und der CAE-Simulationssoftware unterscheidet, wobei die dritte Software über die ersten und zweiten Maschinenparameter oder alle Dateien oder Daten, die in der gemeinsamen Sammlung vorhanden sind und/oder sich auf eine oder jede Iteration beziehen, verfügt und/oder Zugriff darauf hat.

12. Verfahren nach Anspruch 11, wobei der Schritt (vi) durch eine Software ausgeführt wird.

13. Verfahren nach Anspruch 11, wobei der Schritt (vi) durch die dritte Software ausgeführt wird.

14. Verfahren nach Anspruch 11, wobei der Schritt (vi) durch die CAE-Simulationssoftware ausgeführt wird.

## Revendications

1.  Procédé de traitement des paramètres de moulage $(P_{i+1})$ d'une machine de moulage par injection (10) obtenus par CAE, comprenant les étapes suivantes

(i) simuler par CAE un processus de moulage nécessaire pour mouler un objet, la simulation CAE générant des résultats de simulation $(A_i)$,
(ii) générer les premiers paramètres machine $(P_i)$ en traitant électroniquement les résultats de simulation $(A_i)$ pour les rendre compatibles avec le protocole de données d'une unité de commande (20) de la machine, de sorte que la machine puisse exécuter un processus de moulage réel en fonction des premiers paramètres machine ;
(iii) obtention de seconds paramètres machine $(P_{i+1})$, différents des premiers, à partir de l'exécution d'un autre processus de moulage pour le même objet ;
(iv) enregistrer dans une base de données électronique (M) accessible par un opérateur utilisateur les premiers et seconds paramètres machine en les associant dans une collection commune,

**caractérisé par** les étapes suivantes

(v) traiter les données contenues dans la collection commune à l'aide d'un logiciel,
(vi) modifier les paramètres machine calculés par une simulation CAE ultérieure en fonction du traitement produit par ledit logiciel à l'étape (v), afin d'obtenir des paramètres machine optimisés.

2.  Méthode selon la revendication 1, dans laquelle les paramètres génériques de la machine et/ou les données simulées du processus sont également sauvegardés dans ladite collection commune.

3.  Méthode selon la revendication 1 ou 2, dans laquelle on enregistre dans ladite collection des données de processus réelles, c'est-à-dire des valeurs de quantités physiques relatives au processus de moulage détectées par des capteurs à bord de la machine au cours d'un processus réel de moulage par injection.

4.  Procédé selon l'une quelconque des revendications précédentes, dans lequel les données de processus réelles obtenues pendant le moulage avec les premiers et/ou les seconds paramètres de la machine sont sauvegardées dans ladite collection commune.

5.  Méthode selon l'une quelconque des revendications précédentes, dans laquelle l'étape (ii) est réalisée par un logiciel.

6.  Procédé selon l'une quelconque des revendications précédentes, dans lequel l'étape (ii) se déroule avec l'étape supplémentaire consistant à générer, à partir des résultats de simulation obtenus par le logiciel de simulation CAE, un fichier lisible par un logiciel installé dans l'unité de commande, dans lequel ledit fichier subit un processus de conversion des données pour adapter le protocole de données du logiciel de simulation CAE au protocole de données du logiciel installé dans l'unité de commande, le processus de conversion étant effectué par un logiciel.

7. Procédé selon l'une quelconque des revendications précédentes, dans lequel l'autre processus de moulage est exécuté N fois avec des paramètres machine différents des premiers paramètres machine, N>= 2, à chaque N-ième itération, les seconds paramètres machine utilisés sont des paramètres machine générés par les étapes suivantes :

   traitement par un logiciel des paramètres machine de la (N-1)-ème itération et des paramètres machine de la (N-2)-ème itération pour générer de nouveaux paramètres machine, et utiliser ces nouveaux paramètres machine comme paramètres machine dans la N-ième itération de l'étape (iii).

8. Méthode selon l'une quelconque des revendications précédentes, dans laquelle les paramètres machine optimisés sont obtenus par modification interne du logiciel CAE.

9. Méthode selon l'une quelconque des revendications précédentes, dans laquelle les paramètres optimisés sont obtenus en modifiant les données générées par le logiciel CAE.

10. Méthode selon l'une quelconque des revendications précédentes, dans laquelle un logiciel de conversion, qui effectue ladite conversion entre les résultats de la simulation et les paramètres de la machine à charger dans l'unité de commande, est modifié pour optimiser les paramètres de la machine.

11. Méthode selon l'une quelconque des revendications précédentes, dans laquelle l'étape (v) est réalisée par un troisième logiciel distinct du logiciel installé dans l'unité de commande et du logiciel de simulation CAE, ce troisième logiciel ayant, et/ou ayant accès, aux premier et deuxième paramètres machine ou à tous les fichiers ou données présents dans ladite collection commune et/ou relatifs à une ou chaque itération.

12. Procédé selon la revendication 11, dans lequel l'étape (vi) est réalisée par un logiciel.

13. Procédé selon la revendication 11, dans lequel l'étape (vi) est réalisée par l'intermédiaire d'un troisième logiciel.

14. Méthode selon la revendication 11, dans laquelle l'étape (vi) est réalisée par le logiciel de simulation CAE.

# Fig. 1

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020188375 A

- DE 4025221 A1